# EUROPÄISCHE PATENTSCHRIFT

(11) **EP 0 392 343 B1**
(45) Veröffentlichungstag und Bekanntmachung des Hinweises auf die Patenterteilung: **24.11.1993**
(21) Anmeldenummer: 90106494.9
(22) Anmeldetag: 05.04.1990
(51) Int. Cl.: F16K 1/30, F16K 37/00, F16K 43/00, F17C 13/04

(54) **Ventilvorrichtung für Gasdruckbehälter**
Valve arrangement for pressure vessel
Dispositif de vanne pour récipiant sous pression

(30) Priorität: 10.04.1989 DE 3911638
(43) Veröffentlichungstag der Anmeldung: 17.10.1990
(73) Patentinhaber: G O K REGLER UND ARMATUREN GMBH & CO. KG, D-97342 Seinsheim (DE)
(72) Erfinder: Gottfried, Josef, Dipl.-Ing., D-5200 Siegburg (DE); Kleine, Karl Heinz, D-5200 Siegburg (DE)
(74) Vertreter: Hoepffner, Günter, Dipl.-Ing. Dr.jur.

(56) Entgegenhaltungen:
- DE-A- 3 507 263
- DE-A- 3 610 855
- GB-A- 2 151 335
- US-A- 3 459 218

## Beschreibung

Ventilvorrichtung gemäß dem ersten Teil des Patentanspruchs 1.

Sicherheitsventile haben die Aufgabe, Druckbehälter vor einem unzulässig hohen Druck zu schützen und nach Erreichen des zulässigen Behälterbetriebsdruckes einen entstehenden Überdruck abblasen zu lassen. Ein solcher Überdruck kann entstehen durch Überfüllung eines Druckbehälters, durch eine Ausdehnung des Gases infolge starker Temperatureinwirkung, zum Beispiel bei Flüssiggas-Propan-Butan, oder durch Einsetzen einer chemischen Reaktion. Die Druckbehälterverordnung schreibt eine in bestimmten Zeitabständen vorzunehmende Funktionsprüfung dieser Sicherheitsventile vor. Mit Umständen verbunden ist eine solche Funktionsüberprüfung, insbesondere auf den richtigen Ansprechdruck, wenn der Druckbehälter zum Beispiel vollgefüllt ist mit Flüssiggas-Propan-Butan und eine Druckerhöhung bis zum Ansprechdruck des Sicherheitsventiles nur mit einem großen Aufwand durch Hinzunahme weiterer technischer Betriebsmittel oder durch völlige Entleerung und Herausschrauben des Sicherheitsventiles zur Überprüfung möglich ist. Zur Vereinfachung dieser Überprüfung wurde ein unter Behälterdruck austauschbares Sicherheitsventil entwickelt.

Eine besonders vorteilhafte Konstruktion eines unter Behälterdruck austauschbaren Sicherheitsventiles ist bekannt unter der DE-P 35 07 263 mit Erweiterung in der DE-P 36 10 855.

Auch ist es bekannt, derartige Sicherheitsventile, wie z.B. in der US-Patentschrift 3 459 218 beschrieben, mit akustischen Warneinrichtungen zu versehen, die bei einem auftretenden Überdruck ansprechen.

Als Nachteil dieser Ausführung und aller anderen in dieser Richtung bekannten Konstruktionen wird seitens der Fachausschüsse und deren Prüforganen entgegen gehalten, daß während der Zeit, da das Sicherheitsventil aus dem Schließventil herausgeschraubt wird, der Druckbehälter ohne Sicherheitsventil ist. Es kann zumindest theoretisch möglich sein, daß durch irgendwelche nicht vorhersehbaren Umstände eben kein neues Sicherheitsventil eingeschraubt wird; der Druckbehälter bleibt dann ohne Überdruckabsicherung.

Diesen Nachteil zu beseitigen ist Aufgabe dieser Erfindung, mit dem Ziel, während des Austauschvorganges, also nach dem Herausschrauben des Sicherheitsventiles, ein akustisches Signal freizusetzen, welches eindringlich den Prüfenden und auch die Umgebung darauf hinweist, daß hier ein Sicherheitsventil herausgeschraubt wurde, welches durch ein neues ersetzt werden muß. Eine weitere verfeinerte Aufgabe, die mit der Erfindung zu lösen ist, liegt darin, ein akustisches Signal bereits dann freizusetzen, wenn das Sicherheitsventil auch nur zum Teil herausgeschraubt wird. Neben der akustischen Signalgebung soll die Erfindung auch eine, wenn auch verminderte, Überdrucksicherung bieten für den Fall, daß trotz der akustischen Signalgebung kein Sicherheitsventil eingeschraubt wird.

Diese Aufgabe wird erfindungsgemäß durch die kennzeichnenden Merkmale des Anspruches 1 dargestellt. Die in den einzelnen Unteransprüchen aufgeführten Gestaltungsmerkmale sind vorteilhafte Ausbildungen der Aufgabenlösung.

Der besondere Vorteil dieser Erfindung liegt darin, daß das nach dem Herausschrauben des Sicherheitsventiles oder auch schon beim Beginn des Herausschraubens ertönende akustische Signal nicht nur vom jeweiligen Austauschpersonal gehört, sondern auch der weiteren Umgebung mitgeteilt wird, so daß damit ein unaufhörliches Warnsignal dafür gegeben wird, ein neues, überprüftes Sicherheitsventil umgehend wieder einzuschrauben, um damit dem Druckbehälter seine Sicherheitseinrichtung wiederzugeben - was also den Umweltsicherheitsfaktor sehr wesentlich erhöht.

Auf beigefügten Zeichnungen werden Ausführungsbeispiele näher beschrieben.

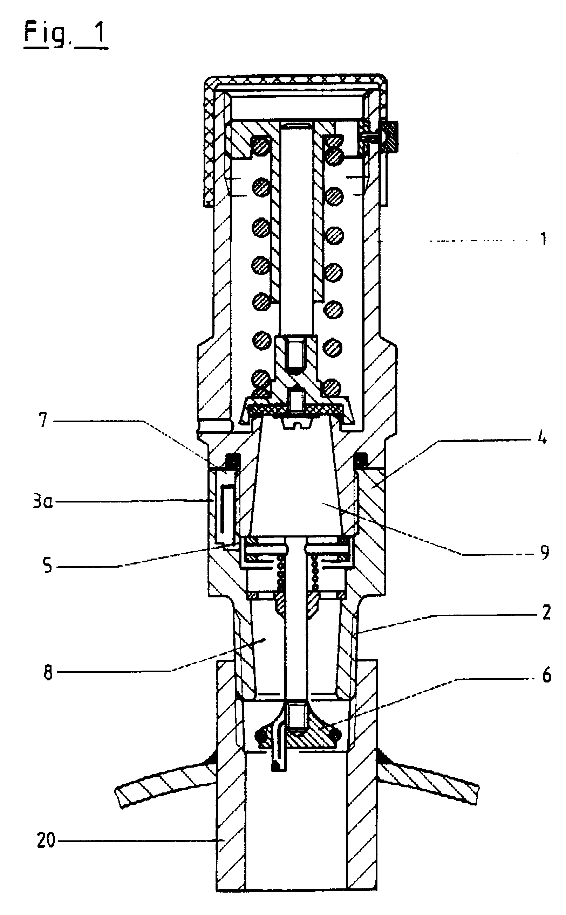

- Fig.1: zeigt im Schnitt ein Sicherheitsventil 1 voll eingeschraubt in ein Schließventil 2, welches wiederum durch eine Gewindeverbindung mit der Druckbehältermuffe 20 verbunden ist. Der Ventilschließkegel 6 ist voll geöffnet; die Sicherheitseinrichtung befindet sich im Betriebszustand. In der seitlichen Wandung 4 des Schließventiles ist eine akustische Warn-Signaleinrichtung 3 a angeordnet, deren Gas- und Tonaustrittsöffnung 7 durch das aufgeschraubte Sicherheitsventil verschlossen ist. Eine klein dosierte Druckzuführungsbohrung 5 führt in den Strömungsraum 9, wo der volle Behälterdruck herrscht. Der Druckzuführungsbohrung zugeschaltet ist zweckmäßigerweise eine Druckausgleichsbohrung 10, die daneben in der Wandung 4 untergebracht ist, um erforderlichenfalls damit eine Druckangleichung für den akustischen Signalgeber zu erreichen. Sobald mit dem Lösen des Sicherheitsv entiles 1 begonnen wird, öffnet sich,wie

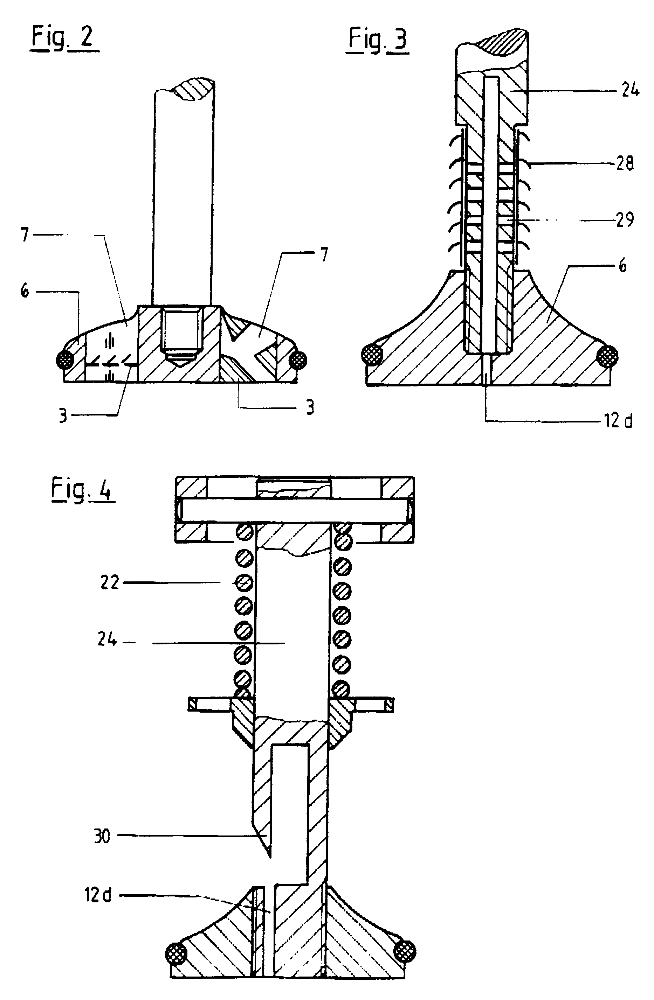

- Fig.2: zeigt einen losen Ventilschießkegel 6 mit einer unter vollem Behälterdruck stehenden akustischen Warn-Signaleinrichtung 3, die ausgebildet sein kann als Turbinensirene, an deren Klang auch der Behälterüberdruck zu erkennen ist, oder als eine Lippenpfeife oder eine andere akustische Signaleinrichtung, die für wechselnde Drücke geeignet ist.
- Fig.3: zeigt einen Ventilschließkegel 6 mit Schließkegelstange 24, die oberhalb des Schließkegels 6 abgesetzt ist, dazwischen angeordnet ein Sirenen-Turbinenrad 28, welches aus den Windlöchern 29 angetrieben wird und ein akustisches Signal abgibt. Die Gasdruckzuführung erfolgt durch die Zuflußdosierung 12 d im Ventilschließkegel 6.
- Fig.4: zeigt eine Lippenpfeife 30, angeordnet innerhalb der Ventilstange 24; die Gas-Windzuführung erfolgt durch eine Zuflußdosierung 12 d in der Ventilstange.

Bei der Anordnung der akustischen Warn-Signaleinrichtung 3 muß darauf geachtet werden, daß im Falle eines entstehenden Überdruckes im Behälter die vom Sicherheitsventil 1 verlangte volle Abblasemenge auch durch den Strömungskanal 8 des Schließventiles austreten kann, der Ventilschließkegel 6 mit seiner strömungsgünstigen Formgebung zum Eintritt in den Schließventilkörper also keine Behinderung durch Aufbauteile erfahren darf. Die Warn-Signaleinrichtungen sind deshalb auf der Unterseite des Ventilschließkegels 6 angeordnet, wo diese im Windschatten des Gasstromes liegen, oder so in den Ventilschliesskegel 6 , in die Schliesskegelstange 24,zwischen Ventilkegel 6 und Schliesskegelstange 24 ,im Schliessventil 2 oder der Wandung 4 des Schliessventiles eingesetzt bzw. angeordnet ist, dass die Ausblasemenge des Gases beim Ansprechen des in Funktion tretenden Sicherheitsventiles 1 möglichst nicht vermindert wird. Die pneumatisch oder mit Dampf angeregten Lokomotivpfeifen, die Alarmsirenen , die Trillerpfeifen, geben ein Beispiel eines weit hörbaren akustischen Signales.

### Bezugszeichen

- 1: Sicherheitsventil
- 2: Schließventil
- 3,3a: akustische Warn-Signaleinrichtung
- 4: Wandung des Schließventiles
- 5: Druckzuführungsbohrung
- 6: Ventilschließkegel
- 7: Gas- und Tonaustrittsöffnung
- 8: Strömungskanal
- 9: Strömungsraum
- 12: d Zuflußdosierung
- 20: Druckbehältermuffe
- 22: Schließfeder
- 24: Schließkegelstange
- 28: Sirenen-Turbinenrad
- 29: Windlöcher
- 30: Lippenpfeife

## Patentansprüche

1. Ventilvorrichtung für Gasdruckbehälter bestehend aus einem am Behälter angeschraubten Schließventil (2) und einem unmittelbar an diesen lösbar befestigten Sicherheitsventil (1), das seinerseits unter Behälterdruck austauschbar ist, wobei das Schließventil (2) in die Schließstellung übergeht sofern das Sicherheitsventil (1) vom Schließventil (2) gelost wird, **dadurch gekennzeichnet,** daß im Schließventil (2) mindestens eine akustische Warnsignaltoneinrichtung (3, 3a) angeordnet ist, die in Wirkungsabhängigkeit vom entweichenden Leckagegas beim Lösen des Sicherheitsventils (1) steht.

2. Ventilvorrichtung nach Anspruch 1, **dadurch gekennzeichnet,** daß als akustische Warnsignaleinrichtung (3, 3a) eine oder mehrere Pfeifen, die auf schwingende Gaswindmassen ansprechen, vorgesehen sind.

3. Ventilvorrichtung nach Anspruch 1, **dadurch gekennzeichnet,** daß als akustische Warnsignaleinrichtung (3, 3a) eine oder mehrere auf Gasdruck ansprechende Sirenen vorgesehen sind.

4. Ventilvorrichtung nach Anspruch 1, wobei das Schließventil (2) einen Ventilschließkegel (6) und eine Schließkegelstange (24) aufweist, **dadurch gekennzeichnet,** daß die akustische Warnsignaleinrichtung (3a) in der Wandung (4) des Schließventils (2) angeordnet ist, deren Druckzuführungsbohrung (5) zum Strömungsraum (9) oberhalb des Ventilschließkegels (6) führt und deren Tonaustrittsöffnung (7) durch das eingeschraubte Sicherheitsventil (1) verschlossen ist.

5. Ventilvorrichtung nach Anspruch 1, wobei das Schließventil (2) einen Ventilschließkegel (6) und eine Schließkegelstange (24) aufweist, **dadurch gekennzeichnet,** daß die akustische Warnsignaleinrichtung (3, 3a) an oder in der Schließkegelstange (24) angeordnet ist.

6. Ventilvorrichtung nach Anspruch 1, wobei das Schließventil (2) einen Ventilschließkegel (6) und eine Schließkegelstange (24) aufweist, **dadurch gekennzeichnet,** daß die akustische Warnsingaleinrichtung (3, 3a) in einem Spalt zwischen Schließkegelstange (24) und Ventilschließkegel (6) angeordnet ist.

## Claims

1. Valve arrangement for gas pressure vessels comprising of an isolation valve (2) threaded onto the vessel and, directly attached to this, a removable safety valve (1) which for its part can be exchanged with the vessel remaining under pressure, resulting in the isolation valve (2) assuming its closed setting, as long as the safety valve (1) is removed from the isolation valve (2), characterised in that there is at least one acoustic warning-signal device (3 3 a) fitted in the isolation valve (2) which depends for its operation on the leakage of gas escaping on the removal of the safety valve (1).

2. Valve arrangement in accordance with Claim 1, characterised in that one or a plurality of whistles which respond to vibrating masses of gas/air is provided as an acoustic warning-signal device (3, 3 a).

3. Valve arrangement according to Claim 1, characterised in that one or a plurality of sirens which respond to gas pressure is provided as an acoustic warning-signal device (3, 3 a).

4. Valve arrangement in accordance with Claim 1, with the isolation valve (2) featuring a valve sealing taper (6) and a sealing cone (24), characterised in that the acoustic warning-signal device (3, 3 a) is located in the wall (4) of the isolation valve (2), its pressure feed bore hole (5) to the flow chamber (9) leads to above the valve sealing taper (6) and its sound emission aperture (7) is closed off by the safety valve (1) once this is screwed in.

5. Valve arrangement in accordance with Claim 1, with the isolation valve (2) featuring a valve sealing taper (6) and a sealing cone (24), characterised in that the acoustic warning-signal device (3, 3 a) is located on or in the sealing cone (24).

6. Valve arrangement in accordance with Claim 1, with the isolation valve (2) featuring a valve sealing taper (6) and a sealing cone (24), characterised in that the acoustic warning-signal device (3, 3 a) is located in a gap between the sealing cone (24) and the valve sealing taper (6).

## Revendications

1. Dispositif de soupape pour récipient sous pression regroupant un robinet d'isolement (2) vissé sur le récipient et une soupape de sûreté (1) amovible directement montée sur ce robinet, la soupape de sûreté pouvant être changée tout en gardant le récipient sous pression car le robinet d'isolement (2) se ferme dès que la soupape de sûreté (1) est désolidarisée du robinet d'isolement (2), l'ensemble étant caractérisé par la présence dans le robinet d'isolement (2) d'au moins un dispositif de signalisation acoustique (3, 3 a) qui se déclenche quand la soupape de sûreté (1) est enlevée et que du gaz s'échappe.

2. Dispositif de soupape décrit dans la revendication 1 et caractérisé par un dispositif de signalisation acoustique (3, 3 a) se présentant sous la forme d'un ou de plusieurs sifflets réagissant aux vibrations des masses gazeuses.

3. Dispositif de soupape décrit dans la revendication 1 et caractérisé par un dispositif de signalisation acoustique (3, 3 a) se présentant sous la forme d'une ou de plusieurs sirènes actionnées par la pression du gaz.

4. Dispositif de soupape décrit dans la revendication 1 et prévoyant un robinet d'isolement (2) composé d'un clapet (6) et d'une tige (24), caractérisé par la présence d'un dispositif de signalisation acoustique (3, 3 a) dans la paroi (4) du robinet d'isolement (2) dont l'orifice d'alimentation en pression (5) débouche sur une chambre d'écoulement (9) située au-dessus du clapet (6) et dont l'orifice de sortie du signal sonore (7) est obturé par la soupape de sûreté (1) vissée.

5. DIspositif de soupape décrit dans la revendication 1 et prévoyant un robinet d'isolement (2) composé d'un clapet (6) et d'une tige (24), caractérisé par la présence d'un dispositif de signalisation acoustique (3, 3 a) sur ou dans la tige (24) du clapet.

6. Dispositif de soupape décrit dans la revendication 1 et prévoyant un robinet d'isolement (2) composé d'un clapet (6) et d'une tige (24), caractérisé par la présence d'un dispositif de signalisation acoustique (3, 3 a) inséré dans un interstice entre la tige (24) et le clapet (6).
